# FASCICULE DE BREVET EUROPEEN

(11) **EP 2 603 012 B1**
(45) Date de publication et mention de la délivrance du brevet: **25.10.2017**
(21) Numéro de dépôt: 12195335.0
(22) Date de dépôt: 03.12.2012
(51) Int. Cl.: H04N 21/472, H04N 21/41, H04N 21/488

(54) **Notification relative à des contenus diffusés**
Mitteilung über verbreitete Inhalte
Notification relating to broadcast content

(30) Priorité: 06.12.2011 FR 1161191
(43) Date de publication de la demande: 12.06.2013
(73) Titulaire: Orange, 75015 Paris (FR)
(72) Inventeur: Collet, Jean-François, 35700 Rennes (FR); De Bailliencourt, Thomas, 92100 Boulogne Billancourt (FR); Cochet, Jérôme, 35520 Melesse (FR)

(56) Documents cités:
- EP-A1- 1 189 433
- EP-A1- 1 677 538
- EP-A1- 1 699 236
- WO-A1-02/096102
- US-A- 5 151 788
- US-A1- 2008 313 667

## Description

L'invention se rapporte au domaine de la télévision et plus particulièrement à celui de l'information d'un utilisateur sur des programmes diffusés.

Des guides de programmes, tels que par exemple des EPG (pour "Electronic Program Guide" en anglais) permettent à des utilisateurs de connaître par avance les programmes diffusés par les chaînes de télévision.

Des méthodes basées sur ces EPG permettent de prévenir un utilisateur du début prévu pour un programme télévisé.

Par exemple, le document EP 1 701 539 A2 publié le 13/09/2006 décrit une méthode dans laquelle un signal d'alerte est émis peu de temps avant le début prévu d'un programme dont le titre a été sélectionné par un utilisateur dans un EPG. Le moment d'émission du signal est déterminé en fonction de l'EPG.

Cependant, les EPG sont déterminés longtemps à l'avance et ne prennent pas en compte les modifications de programme.

De plus, ils ne prennent pas en compte les éventuelles dérives temporelles de programme. Une telle dérive survient par exemple lors de la diffusion d'un journal télévisé : la durée du journal peut être allongée en fonction d'évènements d'actualité, par exemple une catastrophe.

De plus, les EPG ne donnent aucune information concernant les plages de publicité.

De ce fait, le signal d'alerte n'est pas toujours émis au début réel de diffusion du programme choisi.

L'utilisateur ayant reçu cette alerte doit donc subir une diffusion non souhaitée et ne peut s'éloigner du récepteur sans prendre le risque de ne pas voir le début du programme sélectionné.

Il existe donc un besoin pour un utilisateur d'obtentions d'informations précises sur les moments de diffusion d'une émission télévisée.

L'invention vient améliorer la situation.

A cet effet, l'invention se rapporte à un procédé de réception d'une notification relative à un flux en cours de diffusion via un canal de diffusion, caractérisé en ce qu'il comporte une étape de réception, par un dispositif de communication d'un utilisateur, à un instant temporel courant, d'une réponse à une requête formulée par ledit utilisateur pour un évènement correspondant à un début ou à la fin de diffusion d'une partie d'un contenu prédéterminé dans ledit flux via ledit canal, ladite réponse signalant une occurrence dudit évènement dans un intervalle de temps de durée inférieure à un seuil prédéterminé et incluant l'instant de réception de ladite réponse, ladite occurrence ayant été vérifiée à partir d'informations sur ledit flux en cours de diffusion.

Un contenu est un programme ou une suite de programmes de télévision. Un contenu est par exemple une émission, un film, une série télé, un documentaire...

Un contenu comprend une ou plusieurs parties.

Un contenu contenant plusieurs parties est par exemple un film entrecoupé par une ou plusieurs séquences publicitaires, plusieurs épisodes d'une série ou encore un programme récurrent tel que par exemple un journal télévisé.

Des informations sur le flux en cours de diffusion sont utilisées pour vérifier l'occurrence d'un évènement de début ou de fin de diffusion d'un contenu choisi par un utilisateur, dans un intervalle de temps prédéterminé incluant le moment présent. Ces informations permettent d'obtenir de façon précise et quasiment certaine, le moment de début ou de fin de diffusion pour un contenu du flux. Un message relatif à cette occurrence vérifiée est alors transmis à destination d'un dispositif de communication de l'utilisateur.

L'utilisateur est ainsi informé en temps réel du début ou de la fin de la diffusion sur un canal de diffusion déterminé d'un contenu prédéterminé, évènement pour lequel il a émis une requête.

Le seuil prédéterminé pour la durée de l'intervalle de temps permet d'ajuster le degré de précision avec lequel l'utilisateur est informé sur cet événement, c'est-à-dire le niveau de synchronisation entre, d'une part, l'occurrence de l'événement et, d'autre part, la réception de la réponse signalant cette occurrence.

Selon un mode de réalisation particulier du procédé de réception d'une notification, ladite requête est transmise par ledit dispositif de communication et comporte un identifiant dudit canal et dans lequel ledit contenu prédéterminé est identifié à partir d'un contenu en cours de diffusion via ledit canal de diffusion au moment de la transmission de ladite requête.

L'instant de transmission de la requête est utilisé pour identifier le contenu dans le flux en cours de diffusion. Ainsi, la requête formulée par l'utilisateur est simple à construire car elle ne nécessite pas la saisie d'un nom, d'un titre ou d'un code numérique pour identifier le contenu pour lequel une réponse est attendue.

Selon un mode de réalisation particulier du procédé de réception d'une notification, ladite requête est transmise par ledit dispositif de communication et comporte un identifiant dudit canal obtenu en réponse à une requête d'identifiant de canal émise par ledit dispositif de communication en direction d'un dispositif de restitution dudit flux.

Sur requête du dispositif de communication de l'utilisateur, le dispositif de restitution sur lequel le flux diffusé est restitué renvoie un identifiant de canal sur lequel ledit flux est diffusé. Ainsi, il n'est pas nécessaire pour l'utilisateur d'effectuer une opération manuelle de saisie d'identifiant de canal.

Selon un mode de réalisation particulier, le procédé de réception d'une notification comporte une étape préalable de transmission d'un identifiant dudit canal et ladite requête est transmise en réponse à un message préalable émis suite à une occurrence d'un premier évènement correspondant à la fin de diffusion d'une première partie d'un contenu dudit flux et ladite réponse à la requête est relative à une occurrence d'un deuxième évènement correspondant au début de diffusion d'une deuxième partie dudit contenu.

La requête de l'utilisateur est formulée en réponse à une proposition reçue suite à la détection d'un premier évènement. Ce mode de réalisation est adapté à la réception de notification relative aux contenus contenant plusieurs parties dont la diffusion n'est pas continue, mais interrompue. Il est particulièrement adapté à une notification lors d'une reprise d'un programme après une pause publicitaire ou encore à notification lors de la diffusion d'un nouvel épisode d'une série télé.

L'invention se rapporte également à un procédé de transmission d'une notification relative à un flux en cours de diffusion via un canal de diffusion caractérisé en ce qu'il comporte les étapes suivantes :
- obtention d'une requête formulée par un utilisateur d'un dispositif de communication, pour un évènement correspondant au début ou à la fin de diffusion d'une partie d'un contenu prédéterminé dans ledit flux via ledit canal;
- vérification, à partir d'informations sur ledit flux en cours de diffusion, d'une occurrence dudit évènement dans un intervalle de temps de durée inférieure à un seuil prédéterminé;
- transmission, audit dispositif de communication, à un instant temporel courant inclus dans ledit intervalle, d'une réponse à ladite requête signalant ladite occurrence dudit évènement.

Une requête pour un évènement relatif à un contenu prédéterminé d'un flux diffusé via un canal de diffusion prédéterminé est reçue. L'occurrence de cet évènement dans un intervalle de temps incluant l'instant présent est vérifiée à partir d'informations sur ledit flux en cours de diffusion. Ces informations permettent une information quasiment certaine sur l'occurrence de l'évènement. Le seuil prédéterminé pour la durée de l'intervalle de temps incluant l'instant présent permet d'adapter le degré de précision avec lequel l'utilisateur est informé sur cet événement, c'est-à-dire le niveau de synchronisation entre, d'une part, l'occurrence de l'événement et, d'autre part, l'envoi de la réponse signalant cette occurrence. Ainsi, l'utilisateur est prévenu en quasi temps réel du début ou de la fin de diffusion d'un contenu sur un canal prédéterminé.

Selon un mode de réalisation particulier, le procédé de transmission d'une notification comprend une étape préalable d'obtention d'une occurrence d'un premier évènement correspondant à la fin de diffusion d'une première partie d'un contenu dudit flux, une étape d'envoi d'un message relatif à ladite occurrence dudit premier évènement et ledit évènement pour lequel ladite requête est formulée est un évènement correspondant au début de diffusion d'une deuxième partie dudit contenu.

L'étape préalable d'obtention d'une occurrence d'une fin de diffusion d'une première partie de contenu dans le flux en cours de diffusion permet de proposer à un utilisateur de lui envoyer une notification d'une occurrence ultérieure pour le même contenu. La requête de l'utilisateur pour obtenir la notification de l'occurrence de cet évènement ultérieur est alors simple à formuler.

Ce mode de réalisation évite également à l'utilisateur de regarder dans un guide de programmes si et quand une deuxième partie du contenu doit être diffusée.

Selon une autre mode de réalisation du procédé de transmission d'une notification, l'étape de vérification est remplacée par une étape de réception d'une information relative à une occurrence dudit évènement dans un intervalle de temps de durée inférieure à un seuil prédéterminé, ladite occurrence ayant été vérifiée à partir d'informations sur ledit flux en cours de diffusion.

Un serveur de diffusion, en charge de l'émission du flux est capable de déterminer peu de temps avant la diffusion réelle, de façon quasiment certaine, l'occurrence d'un évènement relatif à un contenu diffusé. La réception d'une telle information peu de temps avant son occurrence dans ledit flux permet de prévenir l'utilisateur en temps voulu.

Selon une autre mode de réalisation du procédé de transmission d'une notification, l'étape de vérification comprend une étape de comparaison d'au moins une signature déterminée à partir d'un segment courant dudit flux avec une liste prédéterminée de signatures préenregistrées.

La liste contient par exemple des signatures calculées sur des segments de flux récurrents dans le flux en cours de diffusion. Des segments récurrents sont par exemple des segments de flux correspondant à un début ou à une fin de diffusion d'une séquence publicitaire. La correspondance obtenue entre une signature calculée sur un segment de flux courant et une signature de la liste, lors de l'étape de comparaison permet de signaler une occurrence pour un évènement correspondant au début ou à la fin d'un contenu choisi par l'utilisateur, tout en limitant le nombre de signatures à enregistrer pour le contenu choisi.

Selon une autre mode de réalisation du procédé de transmission d'une notification, l'étape de vérification comprend une étape de réception, pendant un espace temporel prédéterminé de durée inférieure à la durée dudit intervalle de temps, d'une pluralité de messages signalant une occurrence dudit évènement transmis par une pluralité de terminaux distants et l'occurrence est vérifiée si le nombre desdits messages reçus est supérieur à un nombre de messages prédéterminé.

L'occurrence d'un évènement est vérifiée par la réception d'un nombre minimum prédéterminé de messages signalant une occurrence de cet évènement. Ce mode de réalisation est simple à mettre en oeuvre.

L'invention se rapporte également à un serveur de notification relative à un flux diffusé sur un canal de diffusion, caractérisé en ce qu'il comporte :
- des moyens d'obtention d'une requête formulée par un utilisateur d'un dispositif de communication, pour un évènement correspondant au début ou à la fin de diffusion d'une partie d'un contenu prédéterminé dans ledit flux via ledit canal;
- des moyens de vérification, à partir d'informations sur ledit flux en cours de diffusion, d'une occurrence dudit évènement dans un intervalle de temps de durée inférieure à un seuil prédéterminé;
- des moyens de transmission, audit dispositif de communication dudit utilisateur, à un instant temporel courant inclus dans ledit intervalle, d'une réponse à ladite requête signalant ladite occurrence dudit évènement.

L'invention se rapporte encore à un dispositif de communication caractérisé en ce qu'il comporte des moyens de réception, à un instant temporel courant, d'une réponse à une requête formulée par un utilisateur pour un évènement correspondant au début ou à la fin de diffusion d'une partie d'un contenu prédéterminé dans ledit flux en cours de diffusion via un canal de diffusion, ladite réponse signalant une occurrence dudit évènement dans un intervalle de temps de durée inférieure à un seuil prédéterminé et incluant l'instant de réception de ladite réponse, ladite occurrence ayant été vérifiée à partir d'informations sur ledit flux en cours de diffusion.

L'invention se rapporte aussi à un produit programme d'ordinateur comprenant des instructions pour mettre en oeuvre les étapes d'un procédé de transmission d'une notification relative à un flux diffusé, tel que décrit précédemment, lorsqu'il est chargé et exécuté par un processeur.

L'invention se rapporte enfin à un produit programme d'ordinateur comprenant des instructions pour mettre en oeuvre les étapes d'un procédé de réception d'une notification relative à un flux diffusé, tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma bloc illustrant un système selon un premier mode de réalisation de l'invention,
- la figure 2 est un organigramme illustrant les différentes étapes d'un procédé de transmission d'une notification, respectivement d'un procédé de réception d'une notification relative à un flux en cours de diffusion sur un canal de diffusion, selon un premier mode de réalisation,
- la figure 3 est un schéma illustrant un exemple de données relatives à des évènements.
- la figure 4 est un schéma bloc illustrant un système selon un deuxième mode de réalisation de l'invention,
- la figure 5 est un organigramme illustrant les différentes étapes d'un procédé de transmission d'une notification, respectivement d'un procédé de réception d'une notification relative à un flux en cours de diffusion sur un canal de diffusion, selon un deuxième mode de réalisation,
- la figure 6 est un schéma bloc illustrant un système selon un troisième mode de réalisation de l'invention,
- la figure 7 est un organigramme illustrant les différentes étapes d'un procédé de transmission d'une notification, respectivement d'un procédé de réception d'une notification relative à un flux en cours de diffusion sur un canal de diffusion, selon un troisième mode de réalisation,
- la figure 8 est un schéma bloc représentant un équipement mettant en oeuvre un procédé de réception d'une notification selon un mode de réalisation de l'invention,
- la figure 9 est un schéma bloc représentant un serveur mettant en oeuvre un procédé de transmission d'une notification selon un mode de réalisation de l'invention.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

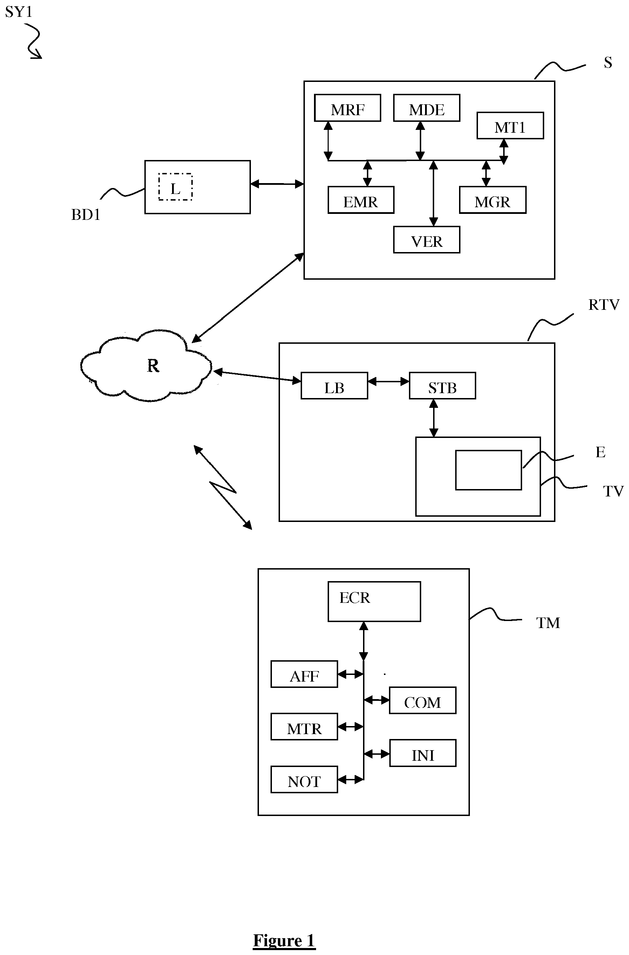

Un premier mode de réalisation d'un procédé de transmission d'une notification, respectivement d'un procédé de réception de notification relative à un flux diffusé, va maintenant être décrit en référence aux figures 1 à 3.

En référence à la **figure 1****,** un système SY1 comprend un dispositif de communication TM, un dispositif de restitution RTV et un serveur de notification S.

Le serveur de notification S est apte à communiquer avec le dispositif de communication TM via un réseau de télécommunication R.

Le dispositif de restitution RTV comprend un récepteur de télévision TV apte à recevoir, via une passerelle domestique LB, par exemple une LiveBox (marque déposée), et un adaptateur STB, par exemple un adaptateur de type Set Top Box, un flux multimédia diffusé F par un serveur de diffusion (non représenté), au travers du réseau de communication R, via un canal de diffusion sélectionné parmi une pluralité de canaux de diffusion par un utilisateur, par exemple au moyen d'une télécommande du dispositif de restitution RTV. Le récepteur de télévision TV est également apte à restituer le flux F reçu. Le récepteur de télévision TV est notamment apte à afficher le flux F sur un écran E du récepteur de télévision TV.

A titre d'alternative, le dispositif de restitution RTV est un équipement fixe (par exemple un équipement dédié à la réception de flux télévisé, un ordinateur...) ou un équipement mobile (par exemple un téléphone mobile, un PDA...).

Egalement, à titre d'alternative, le dispositif de restitution RTV comprend un récepteur de télévision apte à recevoir le flux multimédia F diffusé par voie hertzienne.

Le dispositif de communication TM est par exemple un terminal de téléphonie mobile.

A titre d'alternative, le dispositif de restitution TM est un PDA (pour "Personal Digital Assistant") ou encore un ordinateur de type PC.

Le dispositif de communication TM comporte un module de communication COM avec le réseau de télécommunication R, un module d'initialisation INI, un module de transmission de requêtes MTR, un module de réception de notification NOT, un module d'affichage AFF et un écran ECR.

Le serveur de notification S comporte un module de communication EMR avec un dispositif distant, par exemple avec le dispositif de communication TM, via le réseau de communication R, un module MRF de réception d'un flux diffusé, un module de détection d'évènement MDE, un module de vérification VER et un module de gestion de requêtes MGR.

Le système SY1 comprend également une base de données BD1 reliée au serveur de notification S. La base de données BD1 comprend des identifiants de contenus et en association avec chaque identifiant de contenus des données relatives à des évènements relatifs à ce contenu. Des données relatives à un évènement d'un contenu sont par exemple un type d'évènement et une signature associée.

Un type d'évènement est par exemple une fin de diffusion ou un début de diffusion d'une partie d'un contenu; Dans le cas où le contenu considéré ne comporte qu'une partie, un type d'évènement est le début ou la fin de diffusion du contenu.

Une signature est une valeur calculée à partir d'un signal audio et/ou vidéo correspondant à un segment de durée prédéterminée du flux F. Par exemple, une signature est calculée à partir d'un segment vidéo de trois secondes et/ou à partir d'un segment audio d'une durée de 1 à 30 secondes.

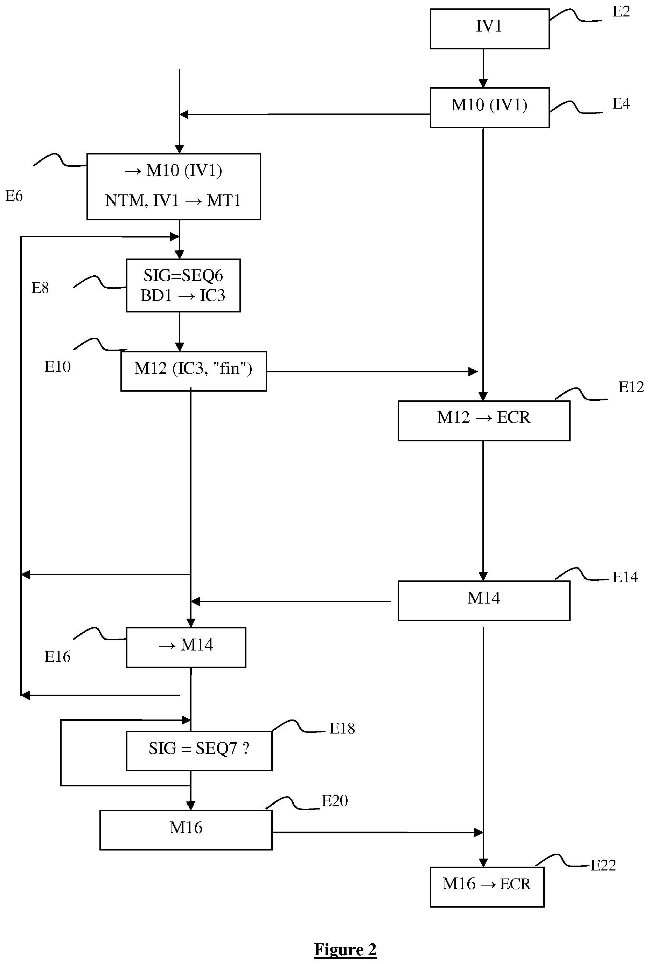

Un premier mode de réalisation d'un procédé de transmission d'une notification, respectivement d'un procédé de réception d'une notification relative à un flux F en cours de diffusion via un canal de diffusion V1, mis en oeuvre dans le système SY1 va maintenant être décrit en référence à la **figure 2****.**

Les étapes E6, E8, E10, E16, E18 et E20 représentent les étapes du procédé de transmission d'une notification mises en oeuvre par exemple par le serveur de notification S.

Les étapes E2, E4, E12, E14 et E22 représentent les étapes du procédé de réception d'une notification mises en oeuvre par exemple par le dispositif de télécommunication TM.

Lors d'une étape préalable, des données relatives à des évènements ont été enregistrées en association avec des identifiants de contenu dans la base de données BD1.

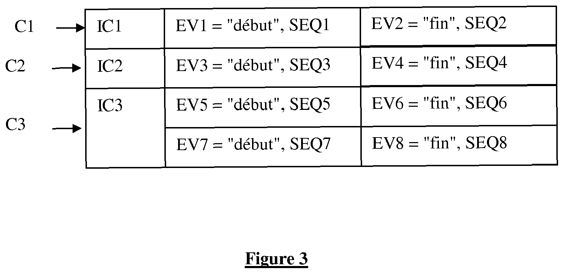

La **figure 3** représente un exemple de données enregistrées dans la base de données BD1.

Comme illustré sur la figure 3, la base de données BD1 comporte ici des données enregistrées en association avec les identifiants de contenu IC1, IC2 et IC3.

Un premier contenu C1 d'identifiant IC1 est par exemple un journal télévisé. En association avec l'identifiant IC1, sont enregistrés des données relatives à un évènement EV1 et des données relatives à un évènement EV2. Les données relatives à l'évènement EV1 sont un type "début" et une signature SEQ1. Les données relatives à l'évènement EV2 sont un type "fin" et une signature SEQ2.

Un deuxième contenu C2 d'identifiant IC2 est par exemple un bulletin météo. En association avec l'identifiant IC2, sont enregistrés des données relatives à un évènement EV3 et des données relatives à un évènement EV4. Les données relatives à l'évènement EV3 sont un type "début" et une signature SEQ3. Les données relatives à l'évènement EV4 sont un type "fin" et une signature SEQ4.

Un troisième contenu C3 d'identifiant IC3 est par exemple un film. En association avec l'identifiant IC3, sont enregistrés des données relatives à quatre évènements EV5, EV6, EV7 et EV8. Les données relatives à l'évènement EV5 sont un type "début" et une signature SEQ5. Les données relatives à l'évènement EV6 sont un type "fin" (par exemple une fin de première partie du contenu C3) et une signature SEQ6. Les données relatives à l'évènement EV7 sont un type "début" (par exemple un début d'une deuxième partie du contenu C3) et une signature SEQ7. Les données relatives à l'évènement EV8 sont un type "fin" et une signature SEQ8.

Lors d'une étape E2, réalisée pendant la restitution du flux F par le récepteur TV, le module d'initialisation INI du dispositif de restitution TM obtient un identifiant IV1 du canal de diffusion V1 via lequel est diffusé le flux F.

Dans le mode de réalisation décrit l'identifiant de canal IV1 est obtenu en réponse à une requête générée et transmise par le terminal TM à l'adaptateur STB par exemple via une liaison de communication sans fil par exemple de type Wifi (marque déposée).

A titre d'alternative, l'identifiant de canal IV1 est saisi par l'utilisateur, par exemple au moyen d'une interface graphique affichée sur l'écran ECR du dispositif de communication TM et d'un clavier de ce dispositif ou d'une interface tactile dans le cas où l'écran ECR du dispositif de communication TM est un écran tactile.

Lors d'une étape E4, le module de transmission d'initialisation INI du dispositif de restitution TM transmet au serveur de notification S, via le module de communication COM et le réseau de communication R, un message M10 contenant l'identifiant de canal IV1.

Le message M10 est par exemple une requête HTTP (pour "HyperText Transfer Protocol" en anglais).

A titre d'alternative, le message M10 est un SMS (pour "Short Message Service" en anglais).

Le message M10 est transmis au serveur de notification S via le réseau GSM et le réseau de communication R.

Egalement, à titre d'alternative, le message M10 est transmis au serveur de notification S via la passerelle domestique LB et le réseau de communication R

Lors d'une étape E6, le message M10 est reçu par le module de communication EMR du serveur de notification S et transmis au module de gestion de requête MGR.

Egalement lors de l'étape E6, l'identifiant de canal IV1 est extrait du message M10 et enregistré en association avec un identifiant NTM du dispositif de communication TM dans une mémoire temporaire MT1 du serveur de notification S, par le module de gestion de requête MGR. L'identifiant NTM du dispositif de communication TM est par exemple extrait d'un entête du message M10.

Lors d'une étape E8, le module de détection d'évènement MDE du serveur de notification S détecte l'occurrence d'un premier évènement EVT correspondant à la fin de diffusion du contenu C dans le flux F en cours de diffusion via le canal de diffusion V1. L'évènement EVT est par exemple l'évènement EV6 de fin de diffusion d'une première partie du contenu C3.

L'occurrence du premier évènement EVT est détectée par le module de détection d'évènement MDE par analyse du flux F en cours de diffusion.

Plus précisément, le flux F est reçu en temps réel par le module de réception de flux MRF du serveur de notification S. Le module de détection d'évènement MDE sélectionne à un instant Ta, un segment courant dans le flux F en cours de diffusion, calcule une signature SIG à partir du segment sélectionné et compare la signature calculée SIG avec les signatures enregistrées dans la base de données BD1.

Si la signature calculée SIG ne correspond à aucune signature enregistrée, le module de détection d'évènement MDE réitère la comparaison avec une signature calculée à partir d'un nouveau segment courant jusqu'à ce qu'une correspondance soit trouvée.

L'occurrence du premier évènement EVT est détectée lorsque la signature calculée correspond à une signature enregistrée dans la base de données BD1, par exemple la signature SEQ6.

Par correspondance, il faut entendre des signatures rigoureusement identiques ou des signatures dont la différence est inférieure à une valeur prédéterminée.

La réception du flux, le calcul d'une signature et la comparaison avec les signatures enregistrées sont effectuées en temps réel. Plus précisément, elles sont réalisées dans un intervalle de temps commençant à l'instant Ta et finissant à un instant temporel Tb et l'intervalle de temps séparant les instants temporels Ta et Tb est de l'ordre de quelques secondes.

Suite à la détection de l'occurrence du premier évènement EVT, le module de détection d'évènement MDE extrait de la base de données BD1, d'une part l'identifiant de contenu IC3 et d'autre part le type "fin" associés à la signature SEQ6 dans la base de données BD1.

Egalement lors de l'étape E8, le module de détection d'évènement MDE du serveur de notification S détecte, par lecture de la base de données BD1, qu'un évènement EV7 correspondant à un début d'une partie de C3 est consécutif à l'évènement EV6 pour le contenu C3.

Lors d'une étape E10, le module de gestion de requêtes MGR envoie au dispositif de communication TM, un message M12 signalant l'occurrence du premier évènement EV6 et proposant à l'utilisateur d'être averti d'une occurrence pour l'évènement EV7.

Par exemple, le message M12 est un message texte du type "fin de diffusion de la première partie du contenu C3. Voulez vous être averti du début de la deuxième partie?".

Le message M12 est reçu par le module de communication COM du dispositif de communication TM et affiché sur l'écran ECR du dispositif de communication TM lors d'une étape E12.

A titre d'alternative, le message M12 contient un identifiant du contenu C3 et le dispositif de communication TM lors de l'étape E12 construit un message texte à partir des données reçues et affiche le message texte construit.

Si l'utilisateur ne répond pas au message M12, le processus s'arrête. Dans ce cas, par exemple, le serveur de notification S réitère l'étape E8 de détection d'occurrence d'évènement dans le flux F après un délai d'attente prédéterminé.

Si l'utilisateur répond, par exemple, en entrant le texte "ok" sur le clavier du dispositif de communication TM, l'étape E12 est suivie d'une étape E14 lors de laquelle le module de communication COM du dispositif de communication TM transmet au serveur de notification S, un message M14 contenant le texte saisi par l'utilisateur.

Lors d'une étape E16, le module de gestion de requêtes MGR du serveur de notification S reçoit, via le module de communication EMR, le message M14 et analyse ce message M14.

Si le message M14 contient une réponse négative, le processus s'arrête. L'étape E16 est par exemple suivie d'une nouvelle étape E8 de détection d'occurrence d'évènement.

Si le message M14 contient une réponse positive, le message M14 représente une requête formulée par l'utilisateur pour l'évènement EV7 correspondant au début de diffusion de la deuxième partie du contenu C3. L'étape E16 est alors suivie d'une étape E18 lors de laquelle le module de vérification VER du serveur de notification S vérifie l'occurrence de l'évènement EV7.

Plus précisément, le module de vérification VER du serveur de notification S extrait de la base de données BD1 la signature SEQ7 associée à l'évènement de début de diffusion EV7 suivant l'évènement de fin de diffusion EV6 détecté lors de l'étape E8. Puis le module de vérification VER extrait un segment courant dans le flux F en cours de diffusion, calcule une signature SIG à partir d'un segment courant extrait et compare la signature calculée SIG avec la signature SEQ7.

Si la signature calculée SIG ne correspond à la signature SEQ7, le module de vérification VER réitère la comparaison avec une signature calculée sur un nouveau segment courant jusqu'à ce qu'une correspondance soit trouvée.

La correspondance d'une signature SIG calculée à partir d'un segment courant et de la signature SEQ7 est significative de l'occurrence de l'évènement EV7 correspondant au début de diffusion de la seconde partie du contenu C3.

La correspondance est déterminée en temps réel, c'est-à-dire à un instant temporel Td tel que la durée entre l'instant Tc du début de diffusion du segment courant pour lequel la signature SEQ7 est obtenue et l'instant Td d'obtention d'un résultat positif pour la comparaison de la signature calculée SIG avec la signature SEQ7 n'excède pas quelques secondes.

Ainsi, l'occurrence est vérifiée dans un intervalle de temps compris entre les instants temporels Tc et Td.

Lors d'une étape E20, le module de gestion de requêtes MRQ du serveur de notification S construit un message de notification M16 et le transmet au dispositif de communication TM.

Le message de notification M16 signale l'occurrence de l'évènement EVT7 et représente une réponse à la requête M14 formulée par l'utilisateur.

Le message de notification M16 est reçu à un instant Te, par le module de notification NOT, via le module de communication COM, du dispositif de communication TM. Puis, le module de notification NOT commande l'affichage par le module d'affichage AFF du message de notification reçu M16 sur l'écran lors d'une étape E22. Le message M16 est par exemple "début de la diffusion de la seconde partie de C3".

L'envoi par le serveur de notification S et la réception du message de notification M16 sont réalisées dès que l'occurrence de l'évènement EV7 correspondant à un début de diffusion pour le contenu C3 est vérifiée.

Ainsi, l'occurrence est vérifiée dans un intervalle de temps IT1 compris entre l'instant temporel Tc du début de diffusion du segment courant pour lequel la signature calculée SIG correspond à la signature SEQ7 et l'instant temporel Te de réception du message de notification M16. Cet intervalle de temps IT1 est de durée D1 inférieure à un seuil prédéterminé S1. Le seuil S1 est par exemple de quelques dizaines de secondes.

La notification est basée sur une occurrence vérifiée de l'évènement et non sur une occurrence prévue à l'avance.

L'étape d'affichage est réalisée dès réception du message de notification M16.

L'affichage du message de notification M16 est éventuellement accompagné d'un signal sonore pour avertir l'utilisateur de l'arrivée du message de notification.

A titre d'alternative, le message de notification M16 est un message sonore.

Dans le mode de réalisation décrit, les signatures associées respectivement à l'évènement de fin de première partie et à l'évènement de début de deuxième partie sont enregistrées dans la base de données en association avec l'identifiant IC3.

Dans une variante du mode de réalisation, seuls un évènement correspondant au début de diffusion et un évènement correspondant à la fin de diffusion sont enregistrés pour le contenu C3 et la base de données BD1 comprend également une liste L de signatures.

La liste L comprend par exemple des signatures correspondant au début et/ou à la fin de diffusion d'un ensemble de pages publicitaires.

Lors de l'étape E8, la signature calculée à partir d'un segment courant du flux F est également comparée aux signatures de la liste L. L'occurrence de l'évènement de fin de première partie est détectée lorsque la signature calculée correspond à une des signatures de la liste L.

Lors de l'étape de vérification E18, le module de vérification VER compare la signature calculée à partir d'un segment courant du flux F en cours de diffusion avec les signatures de la liste L. L'occurrence de l'évènement correspondant au début de diffusion d'une deuxième partie du contenu C3 est vérifiée lorsque la signature calculée correspond à une des signatures de la liste L.

Ce mode de réalisation est particulièrement adapté à la notification suite à une coupure publicitaire lors de la diffusion d'un flux.

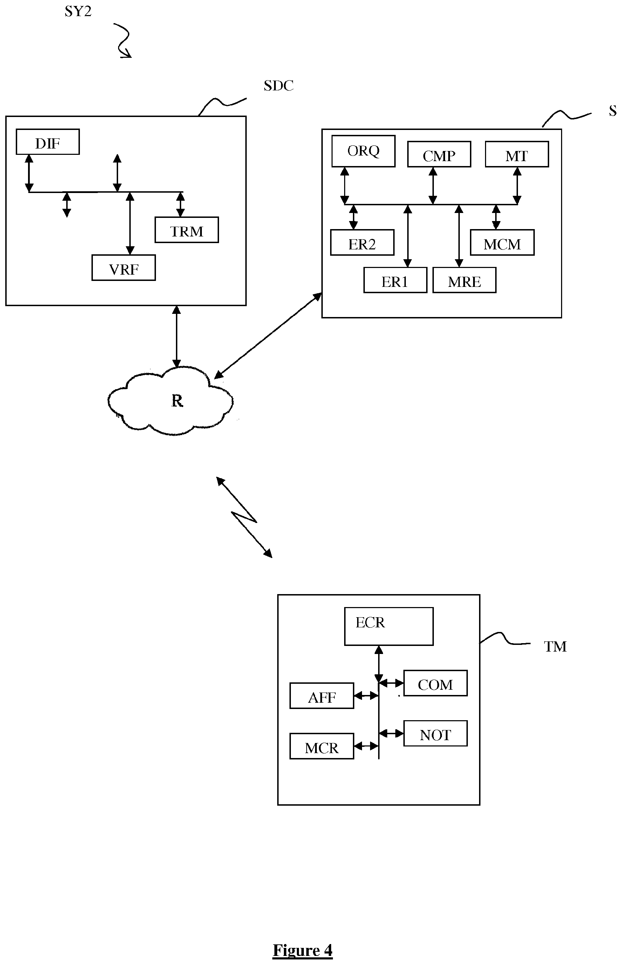

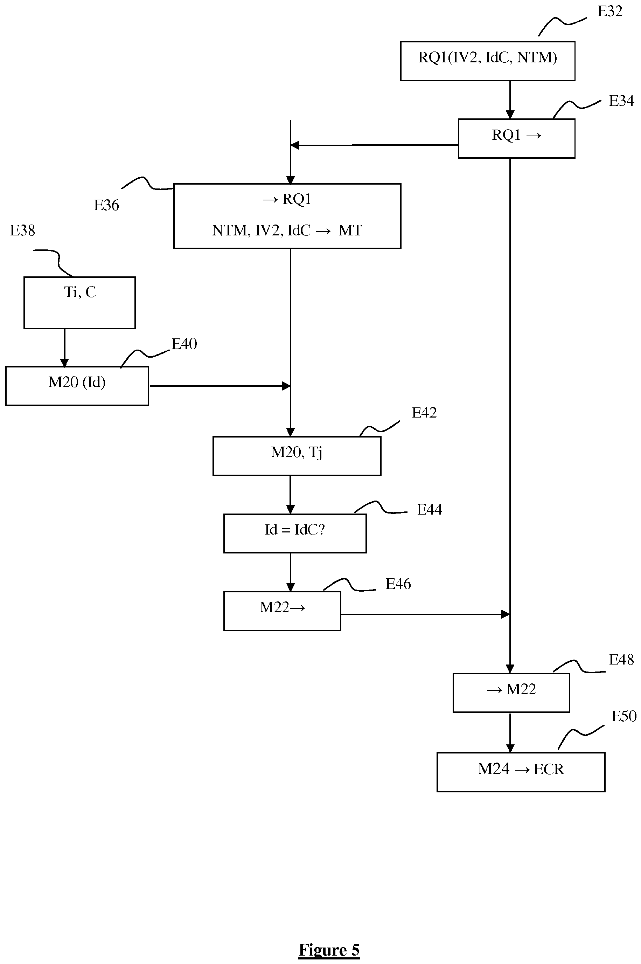

Un deuxième mode de réalisation d'un procédé de transmission d'une notification, respectivement d'un procédé de réception d'une notification relative à un flux F en cours de diffusion via un canal de diffusion V2, va maintenant être décrit en référence aux figures 4 et 5.

En référence à la **figure 4****,** un système SY2 comprend un dispositif de communication TM, un dispositif de diffusion de flux SDC et un serveur de notification S.

Le serveur de notification S est apte à communiquer avec le dispositif de communication TM via un réseau de télécommunication R.

Le dispositif de diffusion de flux SDC est apte à diffuser en mode multicast un flux audiovisuel F via un canal de diffusion prédéterminé V2. Le dispositif de diffusion de flux SDC comporte un module de diffusion DIF, un module de vérification VRF et un module de transmission de données TRM.

Le module de transmission de données TRM est apte à transmettre des données à un dispositif distant, par exemple le serveur de notification S, via le réseau de communication R.

Le dispositif de communication TM est par exemple un terminal de téléphonie mobile.

A titre d'alternative, le dispositif de restitution TM est un PDA (pour "Personal Digital Assistant" en anglais) ou encore un ordinateur de type PC (pour "Personal Computer" en anglais).

Le dispositif de communication TM comporte un module de communication COM avec un dispositif distant, par exemple le serveur de notification S, via le réseau de télécommunication R, un module MCR de construction de requête, un module de notification NOT, un module d'affichage AFF et un écran ECR.

Le serveur de notification S comporte un premier module de communication ER1 apte à communiquer avec le dispositif de communication TM, via le réseau de communication R, un deuxième module de communication ER2 apte à communiquer avec le serveur de diffusion de flux SDC, via le réseau de communication R, un module de d'obtention de requêtes ORQ, un module de traitement CMP, un module de transmission de réponse MCM et un module de réception d'évènements MRE.

Le premier module de communication ER1 du serveur de notification S et le module de communication COM du dispositif de communication TM sont par exemple des modules de communication de type "messagerie instantanée" aptes à recevoir et à transmettre des messages appelés couramment "messages instantanés". Une telle messagerie instantanée est par exemple une messagerie instantanée de type "Jabber" (marque déposée).

Un deuxième mode de réalisation d'un procédé de transmission d'une notification, respectivement d'un procédé de réception d'une notification relative à un flux en cours de diffusion via un canal de diffusion V2, mis en oeuvre dans le système SY2 va maintenant être décrit en référence à la **figure 5****.**

Les étapes E36, E42, E44 et E46 représentent les étapes du procédé de transmission d'une notification mises en oeuvre par exemple par le serveur de notification S.

Les étapes E32, E34, E48 et E50 représentent les étapes du procédé de réception d'une notification mises en oeuvre par exemple par le dispositif de télécommunication TM.

Lors d'une étape E32, le module de construction de requête MCR du dispositif de communication TM construit une requête RQ1 contenant un identifiant de canal IV2, un identifiant IdC d'un contenu C et un identifiant NTM du dispositif de communication TM.

Ces identifiants sont par exemple saisis manuellement par un utilisateur du dispositif de communication TM au moyen d'une interface graphique du dispositif de communication TM.

L'identifiant de canal IV2 est par exemple un nom d'une chaine de télévision, par exemple "TF1".

L'identifiant de contenu IdC est par exemple un nom d'émission, par exemple un titre d'une série ou d'un film.

A titre d'alternative, l'identifiant de contenu IdC est une valeur numérique lue dans un guide de programme, par exemple un guide de programmes électronique (EPG pour "Electronic Program Guide" en anglais).

L'identifiant NTM du dispositif de communication TM est par exemple le numéro téléphonique d'accès à ce dispositif de communication TM.

La requête RQ1 formulée par l'utilisateur est relative à un évènement déterminé EVT pour un contenu déterminé.

Dans le mode de réalisation décrit, l'évènement EVT correspond à un début de diffusion.

A titre d'alternative, l'évènement EVT correspond à une fin de diffusion.

La requête RQ1 est transmise au serveur de notification S par le module de communication COM du dispositif de communication TM lors d'une étape E34.

L'étape E34 est réalisée avant l'occurrence prévue pour l'évènement EVT, c'est-à-dire avant le début de diffusion du contenu C sur le canal de diffusion V2. Par exemple, l'occurrence prévue pour l'évènement EVT est 20h30 et l'étape E34 est réalisée à 20 heures. L'occurrence prévue est par exemple connue de l'utilisateur par lecture d'un guide de programmes.

La requête RQ1 est par exemple transmise sous la forme d'un message instantané.

A titre d'alternative, la requête contenant l'identifiant de canal IV2, l'identifiant de contenu IdC et l'identifiant NTM du dispositif de communication TM est construite puis envoyée par un ordinateur de type PC (pour 'Personal Computer' en anglais) à la disposition de l'utilisateur. Par exemple, la requête RQ1 est transmise sous la forme d'une requête au format HTTP (pour "Hypertext transfert Protocol" en anglais).

La requête RQ1 est reçue à un instant temporel Tg, par le premier module de communication ER1 du serveur de notification S et transmise au module d'obtention de requête ORQ du serveur de notification S lors d'une étape E36.

Egalement, lors de l'étape E36, le module d'obtention de requête ORQ enregistre dans une mémoire temporaire MT du serveur de notification S, l'identifiant NTM du dispositif de restitution TM en association avec l'identifiant de canal IV2 et l'identifiant IdC du contenu C.

A titre d'alternative, lors de l'étape E32, l'identifiant NTM du dispositif de communication TM n'est pas inclus dans la requête RQ1 et lors de l'étape E34, l'identifiant NTM de dispositif de communication TM est extrait de l'entête de la requête RQ1 par le serveur de notification S.

Lors d'une étape E38, le module de vérification de flux VRF du dispositif de diffusion de flux SDC en charge du contrôle du flux à diffuser par le module de diffusion DIF du dispositif de diffusion de flux SDC informe à un instant Th, le module de transmission de données TRM du dispositif de diffusion de flux SDC, de la diffusion, à un instant de diffusion Ti, du début de diffusion pour le contenu C. La durée de l'intervalle de temps séparant l'instant Th de l'instant de diffusion Ti est inférieure à un seuil déterminé. Le seuil déterminé est de quelques secondes, voire de quelques millisecondes, par exemple 2secondes.

Lors d'une étape E40 consécutive à l'étape E38, le module de transmissions de données TRM du dispositif de diffusion de flux SDC transmet au serveur de notification S un message M20 contenant un identifiant de contenu Id. Le message M20 signale l'occurrence, à un instant temporel Ti, d'un évènement correspondant au début de diffusion du contenu C.

Dans le mode de réalisation décrit, le dispositif de diffusion de flux SDC informe le serveur de notification S de tout évènement correspondant à un début ou à une fin de diffusion d'un contenu intervenant, ou plus exactement sur le point d'intervenir, dans le flux F en cours de diffusion. En conséquence, le serveur de notification S reçoit des occurrences pour des évènements correspondant au début et/ou à la fin de contenus au fur et à mesure qu'elles sont vérifiées par le dispositif de diffusion de flux SDC.

Le message M20 contenant un identifiant de contenu Id est reçu par le premier module de communication ER1 du serveur de notification S et transmis au module de réception d'évènement MRE du serveur de notification S qui reçoit à un instant Tj, le message M20 transmis par le dispositif de diffusion de flux SDC (étape E42).

Comme indiqué précédemment, le message M20 est construit et transmis au serveur de notification S peu de temps avant l'occurrence réelle du début de diffusion du contenu C, c'est-à-dire quelques secondes avant l'occurrence d'un évènement de début de diffusion pour le contenu C.

Lors d'une étape E44, le module de traitement CMP du serveur de notification S compare l'identifiant Id obtenu dans le message M20 avec le ou les identifiants enregistrés dans la mémoire temporaire MT. Il compare ainsi l'identifiant Id contenu dans le message M20 avec l'identifiant IdC de la requête RQ1.

Si l'identifiant obtenu Id n'est pas contenu dans la mémoire temporaire MT, le processus s'arrête et le serveur de notification S se positionne en attente d'un nouveau message signalant l'occurrence d'un évènement.

Si l'identifiant Id est dans la mémoire temporaire MT, le module de transmission de réponse MCM du serveur S commande, lors d'une étape E16, la transmission via le premier module de communication ER1 et le réseau de communication R, d'un message M22 à destination du dispositif de communication TM. Le message M22 signalant l'occurrence de l'évènement EVT.

Lors d'une étape E48, à un instant temporel Tk, le message M22 est reçu par le module de communication COM du dispositif de communication TM et transmis au module de notification NOT du dispositif de communication TM.

Lors d'une étape E50, réalisée suite à l'étape E48, le module de notification NOT construit un message M24 à partir des informations contenues dans le message M22 reçu et commande l'affichage par le module d'affichage AFF du message M24 sur l'écran ECR du dispositif de communication TM. Le message M24 est par exemple "dans 5 secondes, début du film C".

L'intervalle de temps IT2 compris entre l'instant temporel Ti de l'occurrence de l'évènement EVT correspondant au début de diffusion du contenu C et l'instant temporel Tk de réception du message M22 signalant l'occurrence de cet évènement est un intervalle de durée D2 inférieure à un seuil prédéterminé S2. Le seuil prédéterminé S2 est par exemple de 5 secondes

Dans le mode de réalisation décrit, le système SY2 comporte un seul dispositif de diffusion de flux. A titre d'alternative, le système SY2 comporte plusieurs dispositifs de diffusion de flux. Par exemple, le système SY2 comporte un premier dispositif de diffusion d'un premier flux via un premier canal de diffusion et un deuxième dispositif de diffusion d'un deuxième flux via un deuxième canal de diffusion. Le serveur de notification S vérifie alors l'occurrence pour un évènement déterminé pour un identifiant de canal contenu dans la requête formulée par l'utilisateur.

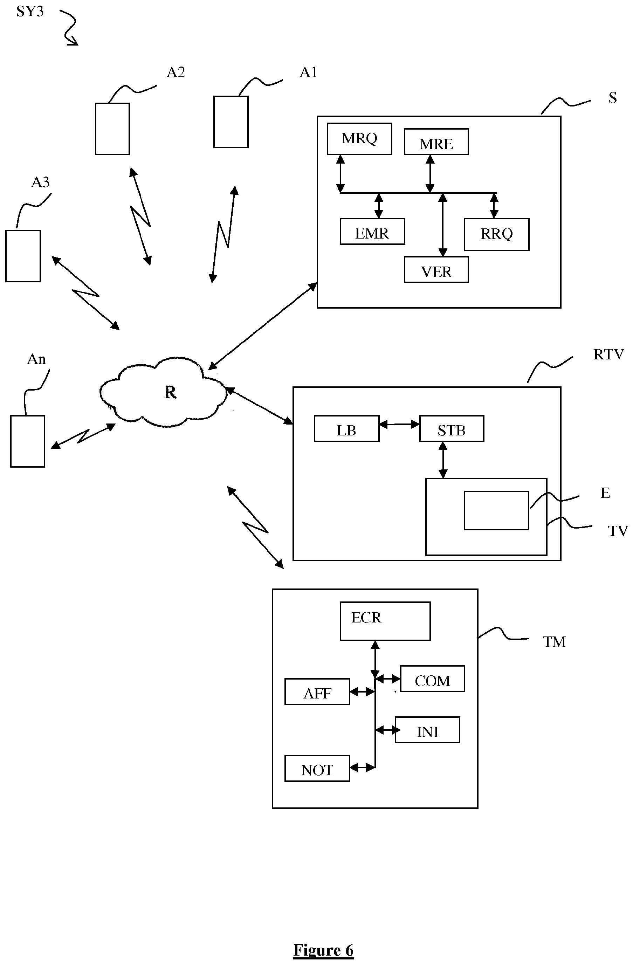

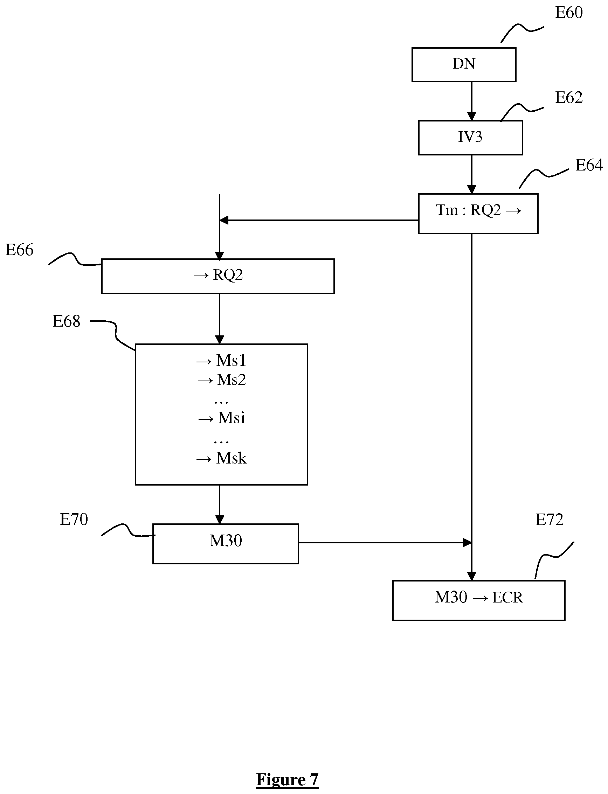

Un troisième mode de réalisation d'un procédé de transmission d'une notification, respectivement d'un procédé de réception d'une notification relative à un flux F en cours de diffusion via un canal de diffusion V3, va maintenant être décrit en référence aux figures 6 et 7.

En référence à la figure 6, un système SY3 comprend un dispositif de communication TM, un dispositif de restitution RTV, un serveur de notification S et une pluralité de terminaux de communication A1, A2,...An aptes à communiquer avec le serveur de notification S via un réseau de communication R.

Le serveur de notification S est apte à communiquer avec le dispositif de communication TM via le réseau de télécommunication R.

Le dispositif de restitution RTV comprend un récepteur de télévision TV apte à recevoir et à afficher sur un écran E de ce dispositif de restitution, via une passerelle domestique LB, par exemple une LiveBox (marque déposée), et un adaptateur STB, par exemple un adaptateur de type Set Top Box, un flux multimédia diffusé F par un serveur de diffusion (non représenté) au travers du réseau de communication R, via un canal de diffusion sélectionné parmi une pluralité de canaux de diffusion par un utilisateur, par exemple au moyen d'une télécommande du dispositif de restitution. Le récepteur de télévision TV est également apte à restituer le flux reçu. Le récepteur de télévision TV est notamment apte à afficher le flux F sur un écran E du récepteur de télévision TV.

Le récepteur de télévision RTV est un équipement fixe (par exemple un équipement dédié à la réception de flux télévisé, un ordinateur...) ou un équipement mobile (par exemple un téléphone mobile, un PDA...).

A titre d'alternative, le dispositif de restitution RTV comprend un récepteur de télévision TV apte à recevoir le flux multimédia F diffusé par voie hertzienne.

Le dispositif de communication TM est par exemple un terminal de téléphonie mobile.

A titre d'alternative, le dispositif de restitution TM est un PDA (pour "Personal Digital Assistant") ou encore un ordinateur de type PC.

Le dispositif de communication TM comporte un module de communication COM avec le réseau de télécommunication R, un module d'initialisation INI, un module de notification NOT, un module d'affichage AFF et un écran ECR.

Le serveur de notification S comporte un module de communication EMR, un module de réception de requête MRQ, un module de vérification VER, un module de gestion de réponse RRQ et un module de réception d'évènements MRE.

Un troisième mode de réalisation d'un procédé de transmission d'une notification, respectivement d'un procédé de réception d'une notification relative à un flux F en cours de diffusion via le canal de diffusion V3, mis en oeuvre dans le système SY3 va maintenant être décrit en référence à la **figure 7****.**

Les étapes E66, E68 et E70 représentent les étapes du procédé de transmission d'une notification mises en oeuvre par exemple par le serveur de notification S.

Les étapes E60, E62, E64 et E72 représentent les étapes du procédé de réception d'une notification mises en oeuvre par exemple par le dispositif de télécommunication TM.

Lors d'une étape E60, réalisée pendant la restitution du flux F par le récepteur TV, le module d'initialisation INI du dispositif de communication TM enregistre une demande de notification DN formulée par un utilisateur du dispositif de communication TM.

La demande de notification DN est par exemple saisie par l'utilisateur au moyen d'une interface graphique du dispositif de communication TM.

La demande de notification DN est par exemple, saisie er reçue pendant la diffusion d'un premier contenu C1, par exemple un journal télévisé. Par exemple, l'utilisateur souhaite regarder un deuxième contenu C2, par exemple un bulletin météo, dont la diffusion prévue est consécutive à la diffusion du journal télévisé. Compte tenu de l'actualité chargée, il pressent que le bulletin météo sera diffusé avec un retard et souhaite profiter de l'intervalle de temps séparant l'instant présent de l'instant d'occurrence de l'évènement correspondant au début de diffusion du deuxième contenu C2 pour s'éloigner momentanément du dispositif de réception RTV ou pour regarder un flux diffusé via un autre canal de diffusion.

L'étape E60 est suivie d'une étape E62 lors de laquelle le module d'initialisation INI du dispositif de communication TM obtient un identifiant IV3 du canal de diffusion V3 sur lequel le flux F est en cours de diffusion.

Dans le mode de réalisation décrit, l'identifiant de canal IV3 est obtenu en réponse à une requête générée et transmise par le dispositif de communication TM à l'adaptateur STB.

Lors d'une étape E64, à un instant Tm, le module d'initialisation INI du dispositif de communication TM transmet au serveur de notification S, via le réseau de communication R, une requête RQ2 contenant l'identifiant de canal IV3.

La requête RQ2 représente une requête formulée par l'utilisateur du dispositif de communication TM.

La requête RQ2 est reçue par le serveur de notification S, à un instant temporel Tn, lors d'une étape E66.

La requête RQ2 est formulée pour le contenu en cours de diffusion au moment Tn de la réception de la requête RQ2 par le serveur de notification S, c'est-à-dire pour le contenu C1.

Lors d'une étape E68, le module de vérification VER vérifie l'occurrence d'un évènement correspondant à la fin de diffusion du contenu C1 en cours de diffusion.

Plus précisément, lors de l'étape E68, le serveur de notification S reçoit, pendant un espace temporel IT de durée D prédéterminée, k messages Msl, Ms2...Msk en provenance de terminaux de communication de la pluralité de terminaux. Chaque message Msi est émis par un terminal de communication Aj.

La durée D de l'espace temporel IT est fixée de façon à ce que le serveur de notification S reçoive un nombre significatif de messages Msi formulés par des utilisateurs de terminaux Aj lors de l'occurrence d'un évènement de fin de diffusion pour le contenu C1. Cependant, la durée D ne peut excéder un seuil prédéterminé. La durée D est par exemple de 10 secondes.

Puis le module de vérification VER du serveur de notification S analyse le contenu des messages Msi et détermine si l'information qu'ils contiennent est une information fiable.

L'information contenue dans les messages Msi est par une information fiable si par exemple un nombre minimum prédéterminé de messages Msi est reçu dans l'espace temporel IT et si un pourcentage minimum prédéterminé de messages parmi les messages reçus signalent l'occurrence de l'évènement correspondant à la fin de diffusion du journal télévisé C1 via le canal de diffusion V3. Les messages Msi considérés comme fiables sont émis suite à l'occurrence, à un instant Tp, de l'évènement qu'ils signalent

Par exemple, le nombre minimum de messages reçus est fixé à 15 et le pourcentage minimum de messages signalant la même occurrence parmi les messages reçus est fixé à 95%. Dans ce cas précis, si 20 messages signalant l'occurrence d'un même évènement sont reçus pendant l'espace temporel IT, l'information contenue dans ces messages, c'est-à-dire l'occurrence de l'évènement, est considérée comme étant fiable.

Si l'information n'est pas déterminée fiable, le module de vérification VER ignore ces messages et attend de nouveaux messages en provenance des terminaux A1, A2...An.

Si l'information est fiable, l'occurrence de l'évènement correspondant à la fin de diffusion du journal télévisé C1 est une occurrence vérifiée.

Le module de gestion de réponse RRQ du serveur de notification S construit un message de notification M30 signalant l'occurrence de l'évènement correspondant à la fin de diffusion du contenu C1 et le transmet au dispositif de communication TM lors d'une étape E70.

Le message est reçu, à un instant Tq, par le module de notification NOT, via le module de communication COM du dispositif de communication TM et lors d'une étape E72, le module de notification NOT commande l'affichage sur l'écran ECR du dispositif de communication du message M30 par le module d'affichage AFF.

Le délai écoulé entre l'occurrence de l'évènement correspondant à la fin de diffusion du contenu C1 et l'instant Tq de réception du message de notification M30 est d'une durée D3 inférieure à un seuil prédéterminé S3.

Ce seuil S3 est déterminé de façon à ce que l'espace temporel IT soit inclus dans l"intervalle de temps IT3 commençant à l'instant temporel Tp d'occurrence de l'évènement correspondant à la fin de diffusion du contenu C1 et finissant à l'instant Tq de réception du message de notification M30. Le seuil S3 est par exemple de 15 secondes

L'affichage du message M30 est éventuellement accompagné d'une sonnerie pour avertir l'utilisateur de l'arrivée du message.

Le message de notification M30 signale à l'utilisateur l'occurrence de l'évènement correspondant à la fin de diffusion du journal télévisé C1. L'utilisateur ayant reçu cette information peut retourner devant le dispositif de restitution ou sélectionner le canal de diffusion V3 si entre temps il a sélectionné un autre canal de diffusion, pour regarder le contenu C2 consécutif au contenu C1.

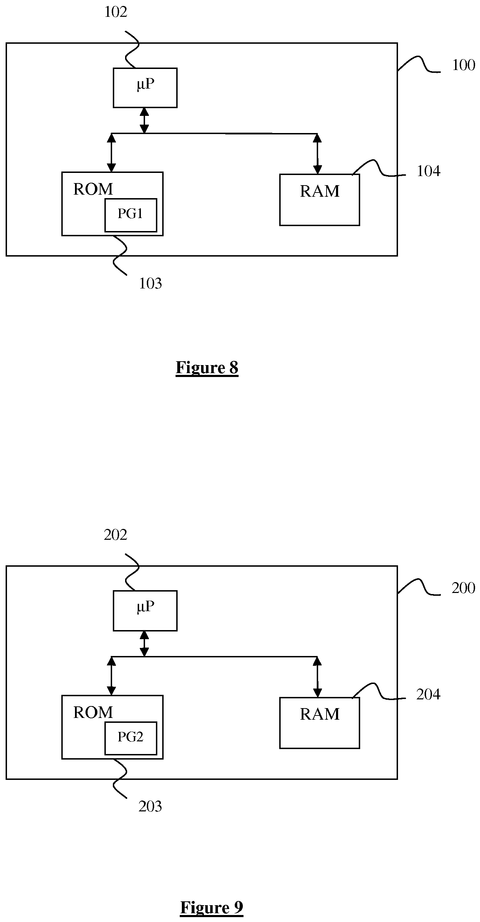

Selon un mode de réalisation choisi et représenté à la **figure 8****,** un équipement mettant en oeuvre un procédé de réception d'une notification selon l'invention est par exemple un dispositif de communication 100 qui comporte de façon connue, notamment une unité de traitement 102 équipée d'un microprocesseur, une mémoire morte de type ROM ou EEPROM 103, une mémoire vive de type RAM 104.

L'équipement 100 peut comporter de manière classique et non exhaustive les éléments suivants: un écran, un microphone, un haut-parleur, un moyen de stockage...

La mémoire morte 103 comporte des registres mémorisant un programme d'ordinateur PG1 comportant des instructions de programme adaptées à réaliser les étapes d'un procédé de réception d'une notification relative à un flux en cours de diffusion selon l'invention.

Lors de la mise sous tension, le programme PG1 stocké dans la mémoire de type EEPROM 103 est transféré dans la mémoire vive qui contiendra alors un code exécutable ainsi que des registres pour mémoriser les variables nécessaires à la mise en oeuvre d'une étape de réception, à un instant temporel courant, d'une réponse à une requête formulée par ledit utilisateur pour un évènement correspondant au début ou à la fin de diffusion d'un contenu prédéterminé dans ledit flux via ledit canal, ladite réponse signalant une occurrence dudit évènement dans un intervalle de temps de durée inférieure à un seuil prédéterminé et incluant l'instant de réception de ladite réponse, ladite occurrence ayant été vérifiée à partir d'informations sur ledit flux en cours de diffusion.

De manière plus générale un moyen de stockage, lisible par un ordinateur ou par un microprocesseur, intégré ou non au dispositif, éventuellement amovible, mémorise un programme mettant en oeuvre les étapes d'un procédé de réception d'une notification relative à un flux en cours de diffusion selon l'invention.

Selon un mode de réalisation choisi et représenté à la **figure 9****,** un serveur mettant en oeuvre un procédé de transmission d'une notification selon l'invention est par exemple un ordinateur 200 qui comporte de façon connue, notamment une unité de traitement 202 équipée d'un microprocesseur, une mémoire morte de type ROM ou EEPROM 203, une mémoire vive de type RAM 204.

Le serveur 200 peut comporter de manière classique et non exhaustive les éléments suivants: un écran, un microphone, un haut-parleur, un moyen de stockage...

La mémoire morte 203 comporte des registres mémorisant un programme d'ordinateur PG2 comportant des instructions de programme adaptées à réaliser les étapes d'un procédé de transmission d'une notification relative à un flux en cours de diffusion selon l'invention.

Lors de la mise sous tension, le programme PG2 stocké dans la mémoire de type EEPROM 203 est transféré dans la mémoire vive qui contiendra alors un code exécutable ainsi que des registres pour mémoriser les variables nécessaires à la mise en oeuvre d'une étape d'obtention d'une requête formulée par un utilisateur d'un dispositif de communication, pour un évènement correspondant au début ou à la fin de diffusion d'un contenu prédéterminé dans ledit flux sur ledit canal, d'une étape de vérification, à partir d'informations sur ledit flux en cours de diffusion, d'une occurrence dudit évènement dans un intervalle de temps de durée inférieure à un seuil prédéterminé et d'une étape de transmission, audit dispositif de communication, à un instant temporel courant inclus dans ledit intervalle, d'une réponse à ladite requête signalant ladite occurrence dudit évènement.

De manière plus générale un moyen de stockage, lisible par un ordinateur ou par un microprocesseur, intégré ou non au dispositif, éventuellement amovible, mémorise un programme mettant en oeuvre les étapes d'un procédé de transmission d'une notification relative à un flux en cours de diffusion, selon l'invention.

## Revendications

1. Procédé de réception d'une notification relative à un flux (F) en cours de diffusion via un canal de diffusion (V1, V2, V3), **caractérisé en ce qu'**il comporte :
une étape de transmission par un dispositif de communication (TM) d'un utilisateur à destination d'un serveur de notification, d'une requête formulée par ledit utilisateur pour un évènement correspondant au début ou à la fin de diffusion d'une partie d'un contenu prédéterminé (C3, C1) dans ledit flux via ledit canal ; et
une étape de réception (E22, E72), par ledit dispositif de communication (TM), à un instant temporel courant, d'une réponse (M16, M30) à ladite requête (M14, RQ2), ladite réponse signalant une occurrence dudit évènement dans un intervalle de temps de durée inférieure à un seuil prédéterminé et incluant l'instant de réception de ladite réponse, ladite occurrence ayant été vérifiée à partir d'informations sur ledit flux en cours de diffusion, lesdites informations étant obtenues à partir d'un signal audio et/ou vidéo correspondant à au moins un segment dudit flux diffusé au cours dudit intervalle.

2. Procédé de réception d'une notification selon la revendication 1 dans lequel ladite requête (RQ2) comporte un identifiant dudit canal et dans lequel ledit contenu prédéterminé est le contenu en cours de diffusion via ledit canal au moment de la transmission de ladite requête.

3. Procédé de réception d'une notification selon la revendication 1 dans lequel ladite requête comporte un identifiant dudit canal obtenu en réponse à une requête d'identifiant de canal émise par ledit dispositif de communication en direction d'un dispositif de restitution dudit flux.

4. Procédé de réception d'une notification selon la revendication 1 **caractérisé en ce qu'**il comporte une étape préalable de transmission d'un identifiant dudit canal et dans lequel ladite requête est transmise en réponse à un message préalable émis par ledit serveur de notification suite à une occurrence d'un premier évènement correspondant à la fin de diffusion d'une première partie d'un contenu dudit flux et ladite réponse à la requête est relative à une occurrence d'un deuxième évènement correspondant au début de diffusion d'une deuxième partie dudit contenu.

5. Procédé de transmission d'une notification relative à un flux (F) en cours de diffusion via un canal de diffusion (V1) **caractérisé en ce qu'**il comporte les étapes suivantes :
- obtention (E16) d'une requête (M14) formulée par un utilisateur d'un dispositif de communication (TM), pour un évènement correspondant au début ou à la fin de diffusion d'une partie d'un contenu prédéterminé dans ledit flux via ledit canal;
- vérification (E18), à partir d'informations sur ledit flux en cours de diffusion, d'une occurrence dudit évènement dans un intervalle de temps de durée inférieure à un seuil prédéterminé, lesdites informations étant obtenues à partir d'un signal audio et/ou vidéo correspondant à au moins un segment dudit flux diffusé au cours dudit intervalle;
- transmission (E20), audit dispositif de communication, à un instant temporel courant inclus dans ledit intervalle, d'une réponse à ladite requête signalant ladite occurrence dudit évènement.

6. Procédé de transmission d'une notification selon la revendication 5 **caractérisé en ce qu'**il comprend une étape préalable d'obtention d'une occurrence d'un premier évènement correspondant à la fin de diffusion d'une première partie d'un contenu dudit flux, une étape d'envoi d'un message relatif à ladite occurrence dudit premier évènement et ledit évènement pour lequel ladite requête est formulée est un évènement correspondant au début de diffusion d'une deuxième partie dudit contenu.

7. Procédé de transmission d'une notification selon la revendication 5 **caractérisé en ce que** l'étape de vérification est remplacée par une étape de réception d'une information relative à une occurrence dudit évènement dans un intervalle de temps de durée inférieure à un seuil prédéterminé, ladite occurrence ayant été vérifiée à partir d'informations sur ledit flux en cours de diffusion.

8. Procédé de transmission d'une notification selon la revendication 5 **caractérisé en ce que** l'étape de vérification comprend une étape de comparaison d'au moins une valeur déterminée à partir d'un segment courant dudit flux avec une liste prédéterminée de valeurs préenregistrées.

9. Procédé de transmission d'une notification selon la revendication 5 **caractérisé en ce que** l'étape de vérification comprend une étape de réception, pendant un espace temporel prédéterminé de durée inférieure à la durée dudit intervalle de temps, d'une pluralité de messages signalant une occurrence dudit évènement transmis par une pluralité de terminaux distants et l'occurrence est vérifiée si le nombre desdits messages reçus est supérieur à un nombre de messages prédéterminé.

10. Serveur (S) de notification relative à un flux diffusé via un canal de diffusion, **caractérisé en ce qu'**il comporte :
- des moyens d'obtention (MGR) d'une requête formulée par un utilisateur d'un dispositif de communication, pour un évènement correspondant au début ou à la fin de diffusion d'une partie d'un contenu prédéterminé dans ledit flux via ledit canal;
- des moyens de vérification (VER), à partir d'informations sur ledit flux en cours de diffusion, d'une occurrence dudit évènement dans un intervalle de temps de durée inférieure à un seuil prédéterminé, lesdites informations étant obtenues à partir d'un signal audio et/ou vidéo correspondant à au moins un segment dudit flux diffusé au cours dudit intervalle;
- des moyens de transmission (MGR), audit dispositif de communication dudit utilisateur, à un instant temporel courant inclus dans ledit intervalle, d'une réponse à ladite requête signalant ladite occurrence dudit évènement.

11. Dispositif de communication (TM) **caractérisé en ce qu'**il comporte des moyens de réception (NOT), à un instant temporel courant, d'une réponse à une requête formulée par un utilisateur pour un évènement correspondant au début ou à la fin de diffusion d'une partie d'un contenu prédéterminé dans ledit flux en cours de diffusion via un canal de diffusion, ladite réponse signalant une occurrence dudit évènement dans un intervalle de temps de durée inférieure à un seuil prédéterminé et incluant l'instant de réception de ladite réponse, ladite occurrence ayant été vérifiée à partir d'informations sur ledit flux en cours de diffusion, lesdites informations étant obtenues à partir d'un signal audio et/ou vidéo correspondant à au moins un segment dudit flux diffusé au cours dudit intervalle.

12. Produit programme d'ordinateur comprenant des instructions pour mettre en oeuvre les étapes d'un procédé de réception d'une notification relative à un flux diffusé, selon la revendication 1, lorsqu'il est chargé et exécuté par un processeur.

13. Produit programme d'ordinateur comprenant des instructions pour mettre en oeuvre les étapes d'un procédé de transmission d'une notification relative à un flux diffusé, selon la revendication 5, lorsqu'il est chargé et exécuté par un processeur.

## Patentansprüche

1. Verfahren zum Empfangen einer Meldung bezüglich eines Datenstroms (F) während des Rundsendens über einen Sendekanal (V1, V2, V3), **dadurch gekennzeichnet, dass** es Folgendes umfasst:
einen Schritt des Sendens einer Anforderung zu einem Meldungs-Server durch eine Kommunikationsvorrichtung (TM) eines Anwenders, wobei die Anforderung durch den Anwender für ein Ereignis formuliert wird, das dem Beginn oder dem Ende des Rundsendens eines Teils eines vorgegebenen Inhalts (C3, C1) in dem Datenstrom über den Kanal entspricht; und
einen Schritt des Empfangens (E22, E72) einer Antwort (M16, M30) auf die Anforderung (M14, RQ2) durch die Kommunikationsvorrichtung (TM) zu einem aktuellen Zeitpunkt, wobei die Antwort ein Auftreten des Ereignisses in einem Zeitintervall mit einer Dauer, die kleiner als ein vorgegebener Schwellenwert ist und den Zeitpunkt des Empfangs der Antwort enthält, meldet, wobei das Auftreten anhand von Informationen über den Datenstrom während des Rundsendens verifiziert wird, wobei die Informationen anhand eines Audio- und/oder Videosignals erhalten werden, das wenigstens einem Segment des Datenstroms, das während dieses Intervalls rundgesendet wird, entspricht.

2. Verfahren zum Empfangen einer Meldung nach Anspruch 1, wobei die Anforderung (RQ2) eine Kennung des Kanals enthält und wobei der vorgegebene Inhalt der Inhalt während des Rundsendens über den Kanal zum Zeitpunkt des Sendens der Anforderung ist.

3. Verfahren zum Empfangen einer Meldung nach Anspruch 1, wobei die Anforderung eine Kennung des Kanals enthält, die in Reaktion auf eine Anforderung einer Kennung des Kanals erhalten wird, die von der Kommunikationsvorrichtung zu einer Vorrichtung zum Wiederherstellen des Datenstroms ausgesendet wird.

4. Verfahren zum Empfangen einer Meldung nach Anspruch 1, **dadurch gekennzeichnet, dass** es einen vorhergehenden Schritt des Sendens einer Kennung des Kanals umfasst, wobei die Anforderung in Reaktion auf eine vorhergehende Nachricht gesendet wird, die von dem Meldungs-Server infolge des Auftretens eines ersten Ereignisses, das dem Ende des Rundsendens eines ersten Teils eines Inhalts des Datenstroms entspricht, ausgesendet wird, und die Antwort auf die Anforderung auf ein Auftreten eines zweiten Ereignisses bezogen ist, das dem Beginn des Rundsendens eines zweiten Teils des Inhalts entspricht.

5. Verfahren zum Senden einer Meldung bezüglich eines Datenstroms (F) während des Rundsendens über einen Sendekanal (V1), **dadurch gekennzeichnet, dass** es die folgenden Schritte umfasst:
- Erhalten (E16) einer Anforderung (M14), die durch einen Anwender einer Kommunikationsvorrichtung (TM) für ein Ereignis formuliert wird, das dem Beginn oder dem Ende des Rundsendens eines Teils eines vorgegebenen Inhalts in dem Datenstrom über den Kanal entspricht;
- Verifizieren (E18) anhand von Informationen über den Datenstrom während des Rundsendens eines Auftretens des Ereignisses in einem Zeitintervall mit einer Dauer, die kleiner als ein vorgegebener Schwellenwert ist, wobei die Informationen anhand eines Audio- und/oder Videosignals erhalten werden, das wenigstens einem Segment des Datenstroms entspricht, das während dieses Intervalls rundgesendet wird;
- Senden (E20) einer Antwort auf die Anforderung, die das Auftreten des Ereignisses meldet, an die Kommunikationsvorrichtung zu einem aktuellen Zeitpunkt, der in dem Intervall enthalten ist.

6. Verfahren zum Senden einer Meldung nach Anspruch 5, **dadurch gekennzeichnet, dass** es einen vorhergehenden Schritt des Erhaltens eines Auftretens eines ersten Ereignisses, das dem Ende des Rundsendens eines ersten Teils eines Inhalts des Stroms entspricht, und einen Schritt des Schickens einer Nachricht bezüglich des Auftretens des ersten Ereignisses umfasst, wobei das Ereignis, für das die Anforderung formuliert wird, ein Ereignis ist, das dem Beginn des Rundsendens eines zweiten Teils des Inhalts entspricht.

7. Verfahren zum Senden einer Meldung nach Anspruch 5, **dadurch gekennzeichnet, dass** der Verifikationsschritt durch einen Schritt des Empfangens von Informationen bezüglich eines Auftretens des Ereignisses in einem Zeitintervall mit einer Dauer, die kleiner als ein vorgegebener Schwellenwert ist, ersetzt ist, wobei das Auftreten anhand von Informationen über den Datenstrom während des Rundsendens verifiziert wird.

8. Verfahren zum Senden einer Meldung nach Anspruch 5, **dadurch gekennzeichnet, dass** der Schritt des Verifizierens einen Schritt des Vergleichens wenigstens eines Wertes, der anhand eines aktuellen Segments des Datenstroms bestimmt ist, mit einer vorgegebenen Liste im Voraus eingetragener Werte umfasst.

9. Verfahren zum Senden einer Meldung nach Anspruch 5, **dadurch gekennzeichnet, dass** der Schritt des Verifizierens einen Schritt des Empfangens mehrerer Nachrichten, die ein Auftreten des Ereignisses melden, die von mehreren entfernten Endgeräten gesendet werden, während eines vorgegebenen Zeitraums mit einer Dauer, die kleiner als die Dauer des Zeitintervalls ist, und das Auftreten verifiziert wird, falls die Anzahl der empfangenen Nachrichten größer als eine vorgegebene Nachrichtenanzahl ist.

10. Meldungs-Server (S) für einen Datenstrom, der über einen Sendekanal rundgesendet wird, **dadurch gekennzeichnet, dass** er Folgendes umfasst:
- Mittel (MGR) zum Erhalten einer von einem Anwender einer Kommunikationsvorrichtung formulierten Anforderung für ein Ereignis, das dem Beginn oder dem Ende des Rundsendens eines Teils eines vorgegebenen Inhalts in dem Datenstrom über dem Kanal entspricht;
- Mittel (VER) zum Verifizieren anhand von Informationen über den Datenstrom während des Rundsendens eines Auftretens des Ereignisses in einem Zeitintervall mit einer Dauer, die kleiner als ein vorgegebener Schwellenwert ist, wobei die Informationen anhand eines Audio- und/oder Videosignals erhalten werden, das wenigstens einem Segment des Datenstroms entspricht, das während dieses Intervalls rundgesendet wird;
- Mittel (MGR) zum Senden einer Antwort auf die Anforderung, die das Auftreten des Ereignisses meldet, an die Kommunikationsvorrichtung des Anwenders zu einem aktuellen Zeitpunkt, der in dem Intervall liegt.

11. Kommunikationsvorrichtung (TM), **dadurch gekennzeichnet, dass** sie Mittel (NOT) zum Empfangen zu einem aktuellen Zeitpunkt einer Antwort auf eine durch einen Anwender formulierte Anforderung für ein Ereignis, das dem Beginn oder dem Ende des Rundsendens eines Teils eines vorgegebenen Inhalts in dem Datenstrom während des Rundsendens über einen Sendekanal entspricht, umfasst, wobei die Antwort ein Auftreten des Ereignisses in einem Zeitintervall mit einer Dauer, die kleiner als ein vorgegebener Schwellenwert ist, die den Zeitpunkt des Empfangens der Antwort enthält, meldet, wobei das Auftreten anhand von Informationen über den Datenstrom während des Rundsendens verifiziert worden ist, wobei die Informationen anhand eines Audio- und/oder Videosignals erhalten werden, das wenigstens einem Segment des Datenstroms entspricht, das während des Intervalls ausgesendet wird.

12. Computerprogrammprodukt, das Befehle enthält, um die Schritte eines Verfahrens zum Empfangen einer Meldung bezüglich eines ausgesendeten Datenstroms nach Anspruch 1 auszuführen, wenn es in einen Prozessor geladen und durch diesen abgearbeitet wird.

13. Computerprogrammprodukt, das Befehle enthält, um die Schritte eines Verfahrens zum Senden einer Meldung bezüglich eines ausgesendeten Datenstroms nach Anspruch 5 auszuführen, wenn es in einen Prozessor geladen und durch diesen abgearbeitet wird.

## Claims

1. Method for receiving a notification relating to a stream (F) being broadcast via a broadcast channel (V1, V2, V3), **characterized in that** it includes:
a step of transmitting a request to a notification server by means of a communication device (TM) of a user, which request is formulated by said user for an event corresponding to the start or to the end of broadcast of a portion of a predetermined item of content (C3, C1) in said stream via said channel; and
a step of receiving (E22, E72) a response (M16, M30) to said request (M14, RQ2) at a current instant in time by means of said communication device (TM), said response signalling an occurrence of said event in a time period the duration of which is shorter than a predetermined threshold and includes the instant of reception of said response, said occurrence having been verified on the basis of information on said stream that is being broadcast, said information being obtained from an audio and/or video signal corresponding to at least one segment of said stream broadcast in said period.

2. Method for receiving a notification according to Claim 1, in which said request (RQ2) includes an identifier of said channel and in which said predetermined item of content is the content that is being broadcast via said channel at the moment of transmission of said request.

3. Method for receiving a notification according to Claim 1, in which said request includes an identifier of said channel obtained in response to a request for a channel identifier transmitted by said communication device to a device for playing back said stream.

4. Method for receiving a notification according to Claim 1, **characterized in that** it includes a prior step of transmitting an identifier of said channel and in which said request is transmitted in response to a prior message transmitted by said notification server following an occurrence of a first event corresponding to the end of broadcast of a first portion of an item of content of said stream and said response to the request relates to an occurrence of a second event corresponding to the start of broadcast of a second portion of said item of content.

5. Method for transmitting a notification relating to a stream (F) being broadcast via a broadcast channel (V1), **characterized in that** it includes the following steps:
- Obtaining (E16) a request (M14) formulated by a user of a communication device (TM) for an event corresponding to the start or to the end of broadcast of a portion of a predetermined item of content in said stream via said channel;
- verifying (E18) an occurrence of said event in a time period the duration of which is shorter than a predetermined threshold on the basis of information on said stream that is being broadcast, said information being obtained from an audio and/or video signal corresponding to at least one segment of said stream broadcast in said period;
- transmitting (E20) a response to said request to said communication device at a current instant in time included in said period, said response signalling said occurrence of said event.

6. Method for transmitting a notification according to Claim 5, **characterized in that** it comprises a prior step of obtaining an occurrence of a first event corresponding to the end of broadcast of a first portion of an item of content of said stream, a step of sending a message relating to said occurrence of said first event and said event for which said request is formulated is an event corresponding to the start of broadcast of a second portion of said item of content.

7. Method for transmitting a notification according to Claim 5, **characterized in that** said verification step is replaced by a step of receiving information relating to an occurrence of said event in a time period the duration of which is shorter than a predetermined threshold, said occurrence having been verified on the basis of information on said stream that is being broadcast.

8. Method for transmitting a notification according to Claim 5, **characterized in that** the verification step comprises a step of comparing at least one value determined on the basis of a current segment of said stream with a predetermined list of prerecorded values.

9. Method for transmitting a notification according to Claim 5, **characterized in that** the verification step comprises a step of receiving, over a predetermined time gap the duration of which is shorter than the duration of said time period, a plurality of messages signalling an occurrence of said event transmitted by a plurality of remote terminals and the occurrence is verified if the number of said received messages is greater than a predetermined number of messages.

10. Server (S) of notification relating to a stream broadcast via a broadcast channel, **characterized in that** it includes:
- means (MGR) for obtaining a request formulated by a user of a communication device for an event corresponding to the start or to the end of broadcast of a portion of a predetermined item of content in said stream via said channel;
- means (VER) for verifying an occurrence of said event in a time period the duration of which is shorter than a predetermined threshold on the basis of information on said stream that is being broadcast, said information being obtained from an audio and/or video signal corresponding to at least one segment of said stream broadcast in said period;
- means (MGR) for transmitting a response to said request to said communication device of said user at a current instant in time included in said period, said response signalling said occurrence of said event.

11. Communication device (TM) **characterized in that** it includes means (NOT) for receiving a response to a request at a current instant in time, which request is formulated by a user for an event corresponding to the start or to the end of broadcast of a portion of a predetermined item of content in said stream being broadcast via a broadcast channel, said response signalling an occurrence of said event in a time period the duration of which is shorter than a predetermined threshold and includes the instant of reception of said response, said occurrence having been verified on the basis of information on said stream that is being broadcast, said information being obtained from an audio and/or video signal corresponding to at least one segment of said stream broadcast in said period.

12. Computer program product comprising instructions for implementing the steps of a method for receiving a notification relating to a broadcast stream, according to Claim 1, when it is loaded and executed by a processor.

13. Computer program product comprising instructions for implementing the steps of a method for transmitting a notification relating to a broadcast stream, according to Claim 5, when it is loaded and executed by a processor.
